# EUROPEAN PATENT APPLICATION

(11) **EP 4 776 422 A1**
(43) Date of publication of application: **15.07.2026**
(21) Application number: 25867197.3
(22) Date of filing: 01.10.2025
(51) Int. Cl.: H01M 50/583, H01M 50/538, H01M 50/567, H01M 50/536, H01M 50/249, H01M 50/566, H01M 10/0587, H01M 10/0525

(54) **POSITIVE ELECTRODE CURRENT COLLECTOR PLATE, AND BATTERY AND VEHICLE COMPRISING SAME**

(30) Priority: 02.10.2024 KR 20240133856; 06.08.2025 KR 20250108067
(71) Applicant: LG ENERGY SOLUTION, LTD., Seoul 07335 (KR)
(72) Inventor: LEE, Geonho, Yuseong-gu, Daejeon 34122 (KR); KIM, Hyoung Kwon, Yuseong-gu, Daejeon 34122 (KR)
(74) Representative: Goddar, Heinz J.
(86) International application number: PCT/KR2025/015590
(87) International publication number: WO 2026/075476

(57) **Abstract**

Provided are a positive electrode current collector plate configured to perform a stable fusing function while reducing resistance, and a battery and a vehicle comprising the same.

A battery including a jelly-roll in which a positive electrode, a negative electrode, and a separator are wound in one direction further includes a can configured to accommodate the jelly-roll, a rivet configured to be electrically connected to the jelly-roll and pass through one side of the can, and a positive electrode current collector plate disposed between the jelly-roll and the rivet and including a rivet coupling portion coupled with the rivet and a plurality of tab coupling portions provided on a radially outer side of the rivet coupling portion so as to be coupled with the jelly-roll, wherein the positive electrode current collector plate further includes a pair of slits provided on an inner side of the plurality of tab coupling portions and disposed to be spaced apart from each other so as to face each other, and a fusing bridge forming a portion of the rivet coupling portion between the pair of slits and constituting a path of current flowing from the jelly-roll to the rivet.

## Description

### [TECHNICAL FIELD]

The present invention relates to a positive electrode current collector plate, and a battery and a vehicle comprising the same, and more particularly, to a positive electrode current collector plate configured to perform a stable fusing function while reducing resistance, and a battery and a vehicle comprising the same.

### [BACKGROUND ART]

Unlike primary batteries, secondary batteries are batteries that can be charged and discharged and thus can be used repeatedly. The range of use of secondary batteries is rapidly expanding from portable electronic devices such as smartphones and laptops to electric vehicles (EV), hybrid electric vehicles (HEV), and energy storage systems (ESS).

Secondary batteries currently commercialized include lithium ion batteries, lithium polymer batteries, nickel-cadmium batteries, and nickel-metal hydride batteries, and in particular, lithium ion batteries having high energy density and long lifespan are widely used.

A secondary battery generally has an electrode assembly composed of a positive electrode, a negative electrode, and a separator positioned between the two electrodes, and a structure in which an electrolyte is accommodated in a case made of a metal material.

In particular, cylindrical secondary batteries are widely used because they are advantageous for mass production due to their standardized shape and have high stability. In fields where high output and capacity are required, such as electric vehicles, a battery pack is configured and used by connecting a plurality of cylindrical battery cells in series or in parallel.

Battery safety is a critical aspect, and when a short circuit occurs inside or outside the battery, excessive current flows and a temperature of the battery rapidly increases, which may lead to thermal runaway and cause a risk of fire or explosion. Various safety devices are included inside the battery to prevent the risk of fire or explosion.

One of the safety devices is a positive electrode current collector plate having a fusing function. A fusing-type positive electrode current collector plate serves as a safety device that cuts off a flow of current by melting and breaking a portion of the positive electrode current collector plate (a fusing bridge) when overcurrent flows. This is driven on the same principle as a fuse in an electric circuit.

In a general fusing positive electrode current collector plate, slits of complicated shapes are formed around a central rivet coupling portion to constitute a fusing bridge. However, such a structure has a problem in that a current path becomes long and complicated because current must flow by bypassing the slits even during normal operation. When the current path becomes longer, a resistance (DC internal resistance, DCIR) of the battery itself inevitably increases.

In order to maximize battery performance and increase energy efficiency, it is essential to reduce the internal resistance of the battery as much as possible. When the resistance is high, energy loss during charging and discharging of the battery increases, and heat generation becomes severe, which adversely affects battery life.

However, a general fusing positive electrode current collector plate is in a trade-off relationship in which an increase in resistance must be accepted to ensure safety. Therefore, there is a need for a design of a positive electrode current collector plate of a new structure capable of lowering the internal resistance of the battery itself while maintaining a fusing function for ensuring safety of the battery.

### [SUMMARY OF THE INVENTION]

### [TECHNICAL PROBLEM]

The present invention is directed to providing a positive electrode current collector plate of a novel structure capable of minimizing internal resistance of a battery by optimizing a current path while performing a stable fusing function, and a battery and a vehicle comprising the same.

### [TECHNICAL SOLUTION]

According to an aspect of the present invention, a battery including a jelly-roll in which a positive electrode, a negative electrode, and a separator are wound in one direction further includes a can configured to accommodate the jelly-roll, a rivet configured to be electrically connected to the jelly-roll and pass through one side of the can, and a positive electrode current collector plate disposed between the jelly-roll and the rivet and including a rivet coupling portion coupled with the rivet and a plurality of tab coupling portions provided on a radially outer side of the rivet coupling portion so as to be coupled with the jelly-roll, wherein the positive electrode current collector plate further includes a pair of slits provided on an inner side of the plurality of tab coupling portions and disposed to be spaced apart from each other so as to face each other, and a fusing bridge forming a portion of the rivet coupling portion between the pair of slits and constituting a path of current flowing from the jelly-roll to the rivet.

In addition, the fusing bridge may be configured to be short-circuited by a current of a predetermined value or more flowing along the fusing bridge, and a width of the fusing bridge may be greater than a length of the fusing bridge.

In addition, the pair of slits may be disposed parallel to each other.

In addition, each of the pair of slits may include a main slit having an arc shape and sub-slits extending along a straight direction from both ends of the main slit.

In addition, the fusing bridge may include a pair of fusing bridges respectively provided at one end and the other end of the pair of slits.

In addition, a first tab coupling portion disposed adjacent to the rivet coupling portion among the plurality of tab coupling portions may be configured to be substantially parallel to the pair of slits.

In addition, a first path of current flowing from the first tab coupling portion to the rivet coupling portion may be configured to pass through the fusing bridge along a substantially straight direction.

In addition, the first path may be a shortest distance path from the first tab coupling portion toward a center of the rivet coupling portion.

In addition, the width of the fusing bridge may be 3.0 mm to 6.0 mm.

In addition, the width of the fusing bridge may be 5.5 mm or less.

In addition, the length of the fusing bridge may be 2.0 mm to 5.0 mm.

In addition, the length of the fusing bridge may be 3 mm or more.

In addition, the battery includes a cylindrical battery cell, and a DC internal resistance of the cylindrical battery cell may be 2.3 mΩ or less.

A vehicle according to an aspect of the present invention may include the battery described in claim 1.

According to an aspect of the present invention, a positive electrode current collector plate disposed between a rivet electrically connected to a jelly-roll and a jelly-roll in which a positive electrode, a negative electrode, and a separator are wound in one direction includes a rivet coupling portion coupled with the rivet, a plurality of tab coupling portions provided on a radially outer side of the rivet coupling portion so as to be coupled with the jelly-roll, a pair of slits provided on an inner side of the plurality of tab coupling portions and disposed to be spaced apart from each other so as to face each other, and a fusing bridge forming a portion of the rivet coupling portion between the pair of slits and constituting a path of current flowing from the jelly-roll to the rivet.

### [ADVANTAGEOUS EFFECTS OF THE INVENTION]

The positive electrode current collector plate and the battery and the vehicle including the same according to the present invention can significantly lower the DC internal resistance

(DCIR) of the battery cell by simplifying a fusing bridge of the positive electrode current collector plate into a pair of slit structures and optimizing a position of a tab coupling portion connected to a positive electrode uncoated portion foil tab such that current passes through the fusing bridge in a shortest straight path, thereby drastically shortening a current path.

The positive electrode current collector plate and the battery and the vehicle including the same according to the present invention can improve the charging/discharging efficiency of the battery cell as the DC internal resistance decreases, and improve the overall performance and lifespan of the battery by reducing unnecessary heat generation.

The positive electrode current collector plate and the battery and the vehicle including the same according to the present invention can effectively balance resistance and fusing time only by simple design changes of adjusting a width and a length of the fusing bridge, and through this, a reliable fusing function that safely protects the battery when overcurrent occurs while maintaining or reducing resistance can be simultaneously secured.

### [BRIEF DESCRIPTION OF DRAWINGS]

FIG. 1 is a view illustrating a cylindrical battery cell in a battery according to a first embodiment of the present invention.
FIG. 2 is a view illustrating a longitudinal cross-section of a cylindrical battery cell in a battery according to a first embodiment of the present invention.
FIG. 3 is a view illustrating a structure of a jelly-roll before being wound in a battery according to the first embodiment of the present invention.
FIG. 4 is a view illustrating a positive electrode current collector plate in a battery according to a first embodiment of the present invention.
FIG. 5 is a view illustrating a positive electrode current collector plate in a battery according to a second embodiment of the present invention.
FIG. 6 is a view illustrating a battery pack in a battery according to a first embodiment of the present invention.
FIG. 7 is a view illustrating a vehicle equipped with a battery according to a first embodiment of the present invention.

### [MODES FOR CARRYING OUT THE INVENTION]

The embodiments described in the present specification and the configurations illustrated in the drawings are only preferred examples of the disclosed invention, and there may be various modifications that may replace the embodiments and drawings of the present specification at the time of filing of the present application.

Additionally, the same reference numbers or symbols presented in each drawing of this specification represent parts or components that perform substantially the same function. Additionally, the terminology used herein is for the purpose of describing embodiments and is not intended to limit and/or restrict the disclosed invention. Singular expressions include plural expressions unless the context clearly indicates otherwise.

In this specification, terms such as "comprise" or "have" are intended to designate that a feature, number, step, operation, component, part, or combination thereof described in the specification exists, but do not preclude the possibility of the existence or addition of one or more other features, numbers, steps, operations, components, parts, or combinations thereof.

In addition, terms including ordinal numbers such as "first", "second", etc. used in this specification may be used to describe various components, but the components are not limited by the terms, and the terms are used only for the purpose of distinguishing one component from another.

Meanwhile, the terms "front," "rear," "upper," and "lower" used in the description below are defined based on the drawings, and the shape and position of each component are not limited by these terms.

Hereinafter, embodiments according to the present invention will be described in detail with reference to the attached drawings.

In describing the embodiments, the axial direction refers to a direction in which an axis forming a winding center of the jelly-roll extends, the radial direction refers to a direction approaching (centripetal) or moving away from (centrifugal) the axis, and the circumferential direction refers to a direction surrounding the axis.

A width direction of the jelly-roll in an unfolded state corresponds to the axial direction of the jelly-roll. A longitudinal direction of the jelly-roll in the unfolded state corresponds to the circumferential direction of the jelly-roll.

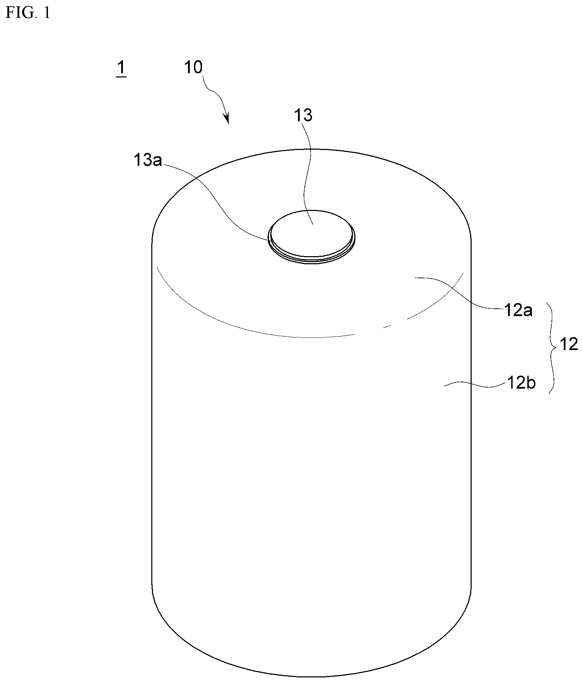

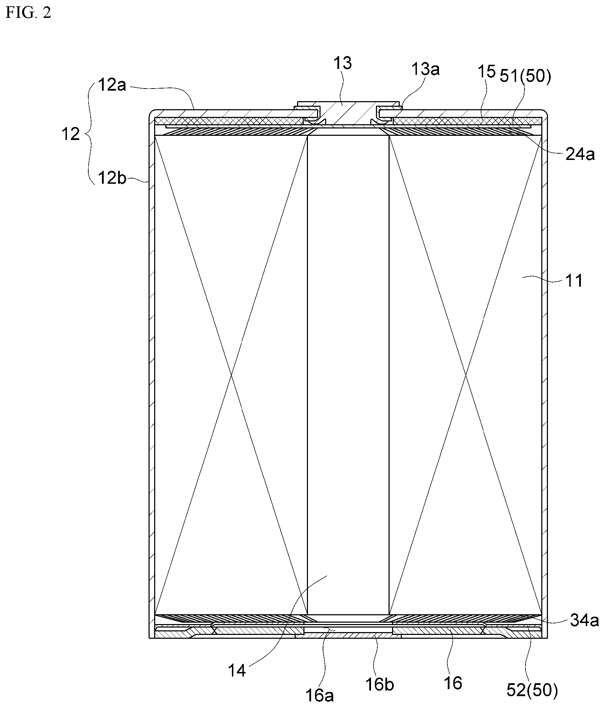

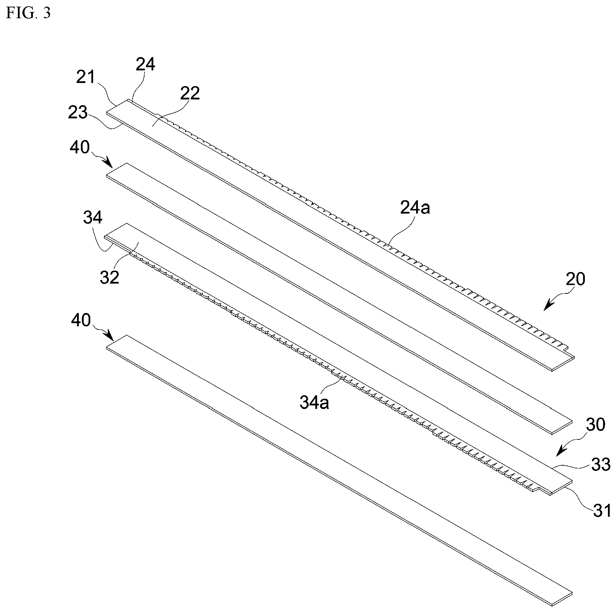

FIG. 1 is a view illustrating a cylindrical battery cell in a battery according to a first embodiment of the present invention. FIG. 2 is a view illustrating a longitudinal cross-section of a cylindrical battery cell in a battery according to a first embodiment of the present invention. FIG. 3 is a view illustrating a structure of a jelly-roll before being wound in a battery according to the first embodiment of the present invention.

Referring to FIGS. 1 to 3, a cylindrical battery cell 10 included in a battery 1 according to the present invention may include a cylindrical battery cell 10 having a form factor ratio (defined as a value obtained by dividing a diameter of the cylindrical battery cell by a height thereof, that is, a ratio of the diameter to the height) of greater than approximately 0.4.

Here, the form factor refers to a value representing a diameter and a height of the cylindrical battery cell 10. For example, the cylindrical battery cell 10 may be a 4611 cell, a 4875 cell, a 4811 cell, a 4880 cell, or a 4680 cell.

In numerical values representing the form factor, the first two numbers indicate the diameter of the cylindrical battery cell 10, and the next two numbers indicate the height of the cylindrical battery cell 10.

In addition, it goes without saying that the present invention may also be applied to a cylindrical battery cell 10 having a form factor ratio of approximately 0.4 or less, for example, an 1865 cell or a 2170 cell.

The cylindrical battery cell 10 may have a cylindrical shape by embedding a jelly-roll 11 in a can 12, which is a cylindrical metal. The cylindrical battery cell 10 may include a jelly-roll 11 and a can 12 for accommodating the jelly-roll 11.

An insulator 15 may be disposed at an upper end of the jelly-roll 11, and a gasket (not shown) may be disposed at a lower end of the jelly-roll 11.

The jelly-roll 11 has a structure in which a separator 40 is interposed between a positive electrode 20 and a negative electrode 30 and wound together therewith, and a center pin 14 may be inserted into a center portion thereof.

The cylindrical battery cell 10 may be formed by accommodating the jelly-roll 11 in the can 12 and injecting an electrolyte into the can 12.

The can 12 is a cylindrical container having an opening formed at an upper portion or a lower portion thereof, and may be made of a metal material having conductivity, such as aluminum or steel. The can 12 may accommodate the jelly-roll 11 in an inner space through the upper or lower opening, and may also accommodate an electrolyte (not shown).

The center pin 14 may include a metal material to impart a predetermined strength, and may have a cylindrical structure formed by bending a plate material into a round shape. The center pin 14 may fix and support the jelly-roll 11 in addition to self-heating, and may function as a passage for discharging gas generated by internal reactions during charging and discharging operations of the cylindrical battery cell 10.

The electrolyte injected into the can 12 may be a non-aqueous electrolyte solution containing a lithium salt, and the non-aqueous electrolyte solution containing a lithium salt may include a non-aqueous electrolyte solution and a lithium salt. As the non-aqueous electrolyte solution, a non-aqueous organic solvent, an organic solid electrolyte, an inorganic solid electrolyte, or the like may be used. However, it is not limited thereto.

A sealing tape (not shown) may be disposed on an outer circumferential surface of the jelly-roll 11. The sealing tape (not shown) may be disposed along the circumferential direction on the outer circumferential surface of the jelly-roll 11, and may be attached to the outer circumferential surface of the jelly-roll 11 by an adhesive layer on a lower surface of the sealing tape (not shown).

However, the present invention is not limited thereto, and sealing tapes (not shown) may be respectively disposed at upper and lower portions of the outer circumferential surface of the jelly-roll 11, and may be attached to the outer circumferential surface of the jelly-roll 11 by various methods other than the adhesive provided on the lower surface of the sealing tape (not shown).

The sealing tape (not shown) may be made of a material having electrical insulation in consideration of a possibility of contact with the positive electrode 20. However, the present invention is not limited thereto, and the sealing tape (not shown) may be made of a material having electrical conductivity in order to prevent electrical conduction from being hindered.

The sealing tape (not shown) may be made of a material such as PET, PP, or PI, and may include a swelling tape that expands by absorbing a non-aqueous electrolyte. However, it is not limited thereto.

The cylindrical battery cell 10 may include a current collector plate 50 electrically connected to the jelly-roll 11, and the current collector plate 50 may be accommodated in the can 12 together with the jelly-roll 11.

The can 12 may include an upper can 12a and a side wall can 12b connected to the upper can 12a and extending in the axial direction. The side wall can 12b may be bent and extend from the upper can 12a. One end of the side wall can 12b facing the upper can 12a may be formed to be open.

The can 12 may include a lid 16 configured to cover the one end of the open side wall can 12b. The upper can 12a may have a disc shape with a hole formed in a center portion thereof, and the side wall can 12b may include a circular tube shape.

The upper can 12a and the side wall can 12b may be manufactured by forming a metal sheet in which nickel is plated on a surface of steel through a deep drawing process, and trimming a front end of the side wall can 12b with a punch in a state in which the front end is held by a blank holder. However, it is not limited thereto.

A rivet 13 may be fitted and coupled into the hole of the upper can 12a. The rivet 13 may be riveted and fixed to the upper can 12a in a state in which a rivet gasket 13a is interposed between the hole of the upper can 12a and the rivet 13.

The rivet gasket 13a may be interposed between the rivet 13 and the upper can 12a to seal an inside and an outside of the can 12 to prevent leakage of an electrolyte and electrically insulate the rivet 13 from the upper can 12a.

However, a connection method between the rivet 13 and the upper can 12a is not limited thereto. For example, as long as a structure is capable of sealing between the rivet 13 and the upper can 12a and electrically insulating the rivet 13 from the upper can 12a, various other fixing methods such as a bolt-nut coupling method, a glass seal method, or a chrome coating and PP-MAH thermal bonding method may be applied.

The rivet 13 may have a first polarity, and the can 12 may have a second polarity. The upper can 12a of the can 12, the side wall can 12b extending from the upper can 12a, and the lid 16 connected to the side wall can 12b may all integrally have the second polarity.

A cylindrical battery cell 10 according to the present invention may include electrode terminals configured to be electrically connected to the jelly-roll 11. The electrode terminals may include a first electrode terminal having the first polarity and a second electrode terminal having the second polarity.

The rivet 13 having the first polarity may constitute the first electrode terminal, and the can 12 and the lid 16 having the second polarity may constitute the second electrode terminal.

In the cylindrical battery cell 10, both the first electrode terminal composed of the rivet 13 having the first polarity and the second electrode terminal composed of the upper can 12a having the second polarity may be disposed at an axial end provided with the upper can 12a, that is, a closed end.

Accordingly, in the cylindrical battery cell 10, both a bus bar (not shown) connected to the rivet 13 and a bus bar (not shown) connected to the upper can 12a may be positioned at an upper portion of the cylindrical battery cell 10.

The first electrode terminal constituted by the rivet 13 may be a positive terminal, and the second electrode terminal constituted by the can 12 may be a negative terminal.

The can 12 may include a crimping portion (not shown) and a beading portion (not shown). The beading portion (not shown) is for stable coupling of a cap assembly including the lid 16, and may be formed along a circumferential direction on an outer circumferential surface of the can 12 and may be formed by being recessed toward a center of the jelly-roll 11 from the outer circumferential surface of the can 12. The beading portion (not shown) may prevent movement of the jelly-roll 11.

The crimping portion (not shown) may be disposed above or below the beading portion (not shown) and formed to surround an edge portion of the cap assembly including the lid 16 along the circumferential direction. The crimping portion (not shown) may facilitate stable coupling of the cap assembly.

The jelly-roll 11 may include a positive electrode 20 and a negative electrode 30 having long sheet shapes, and a separator 40 disposed between the positive electrode 20 and the negative electrode 30. The separator 40 is disposed above or below the positive electrode 20 to physically separate the positive electrode 20 from the negative electrode 30 when the positive electrode 20 is wound in the form of the jelly-roll 11, thereby preventing an electrical short circuit between the positive electrode 20 and the negative electrode 30.

The separator 40 may include a plurality of separators 40 disposed between the positive electrode 20 and the negative electrode 30, above or below the positive electrode 20, and above or below the negative electrode 30. In addition, a separator 40 may be additionally disposed under the negative electrode 30 to prevent contact between the positive electrode 20 and the negative electrode 30 when wound in the form of the jelly-roll 11.

The separator 40 separates the negative electrode 30 from the positive electrode 20 and provides a passage for lithium ions to move, and any separator commonly used in lithium secondary batteries may be used without particular limitation.

The positive electrode 20 may include a positive electrode foil 21 and a positive electrode active material layer 22 formed on one or both surfaces of the positive electrode foil 21. The negative electrode 30 may include a negative electrode foil 31 and a negative electrode active material layer 32 formed on one or both surfaces of the negative electrode foil 31.

The positive electrode foil 21 may include aluminum (Al) to constitute the positive electrode 20 together with the positive electrode active material layer 22, and the negative electrode foil 31 may include copper (Cu) to constitute the negative electrode 30 together with the negative electrode active material layer 32. However, it is not limited thereto.

The positive electrode active material layer 22 may be formed by coating on the positive electrode foil 21, and the negative electrode active material layer 32 may be formed by coating on the negative electrode foil 31.

The positive electrode active material layer 22 may have a nano-structure, which may improve electrical conductivity and increase a surface area of the positive electrode 20 to improve an electrochemical reaction rate. The negative electrode active material layer 32 may include graphite and may undergo a surface modification treatment to maximize reactivity with lithium ions.

The positive electrode active material layer 22 or the negative electrode active material layer 32 may include a positive electrode active material or a negative electrode active material, a conductive material, and a binder.

Specifically, the positive electrode 20 or the negative electrode 30 may be manufactured by applying a positive electrode slurry or a negative electrode slurry, prepared by dispersing a positive electrode active material or a negative electrode active material, a conductive material, and/or a binder in a solvent such as dimethyl sulfoxide (DMSO), isopropyl alcohol, N-methylpyrrolidone (NMP), acetone, or water, to one or both surfaces of the long sheet-shaped positive electrode foil 21 or negative electrode foil 31, removing the solvent of the positive electrode slurry or the negative electrode slurry through a drying process, and then rolling.

As the negative electrode active material, various negative electrode active materials used in the art, such as a carbon-based negative electrode active material, a silicon-based negative electrode active material, or a mixture thereof, may be used.

The conductive material is used to impart conductivity to an electrode, and any material that has electronic conductivity without causing chemical changes in the secondary battery being constructed may be used without particular limitation.

The binder may serve to improve adhesion between particles of the positive electrode active material or the negative electrode active material and to improve adhesion between the positive electrode active material layer 22 and the positive electrode foil 21 or adhesion between the negative electrode active material layer 32 and the negative electrode foil 31.

The jelly-roll 11 is in a wound form and may be manufactured by winding a stack, formed by sequentially stacking the negative electrode 30, the separator 40, the positive electrode 20, and the separator 40 at least once, in one direction around the center pin 14.

The positive electrode 20 may include a positive electrode coated portion 23 in which the positive electrode active material layer 22 is formed on the long sheet-shaped positive electrode foil 21, and a positive electrode uncoated portion 24 in which the positive electrode active material layer 22 is not formed on a portion of the positive electrode foil 21. The positive electrode uncoated portion 24 may be provided on one side in a width direction of the positive electrode foil 21.

The negative electrode 30 may include a negative electrode coated portion 33 in which the negative electrode active material layer 32 is formed on the long sheet-shaped negative electrode foil 31, and a negative electrode uncoated portion 34 in which the negative electrode active material layer 32 is not formed on a portion of the negative electrode foil 31. The negative electrode uncoated portion 34 may be provided on the other side in the width direction of the negative electrode foil 31 so as to face the positive electrode uncoated portion 24.

The positive electrode uncoated portion 24 and the negative electrode uncoated portion 34 may be exposed or protruded in the width direction from the jelly-roll 11 before winding. The positive electrode uncoated portion 24 itself may function as a positive electrode tab, and the negative electrode uncoated portion 34 itself may function as a negative electrode tab.

Notches may be formed at predetermined intervals in the positive electrode uncoated portion 24 to form flag-shaped positive electrode foil tabs 24a, and notches may be formed at predetermined intervals in the negative electrode uncoated portion 34 to form flag-shaped negative electrode foil tabs 34a.

In the drawings, the positive electrode foil tab 24a and the negative electrode foil tab 34a are illustrated as having an isosceles trapezoidal shape. However, the present invention is not limited thereto, and for example, the shapes of the positive electrode foil tab 24a and the negative electrode foil tab 34a may include various shapes such as a semi-circle, a semi-ellipse, a triangle, a rectangle, or a parallelogram.

In the drawings, the positive electrode foil tabs 24a and the negative electrode foil tabs 34a arranged along a longitudinal direction are illustrated as having the same width. However, the present invention is not limited thereto, and for example, the width of the positive electrode foil tab 24a and the negative electrode foil tab 34a may include a form that gradually or stepwise widens from a core side toward an outer circumferential side.

In the drawings, the height of the positive electrode foil tab 24a and the negative electrode foil tab 34a is illustrated as stepwise increasing from the core side toward the outer circumferential side. However, the present invention is not limited thereto, and for example, the heights of the positive electrode foil tabs 24a and the negative electrode foil tabs 34a may be implemented in a constant or gradually decreasing form.

In the drawings, a structure in which the positive electrode foil tabs 24a and the negative electrode foil tabs 34a are omitted in a predetermined section of a centripetal side end portion and a predetermined section of a centrifugal side end portion of the positive electrode uncoated portion 24 and the negative electrode uncoated portion 34 is illustrated. However, the present invention is not limited thereto, and it goes without saying that, for example, the positive electrode foil tabs 24a and the negative electrode foil tabs 34a may not be omitted at the centripetal side end portions of the positive electrode uncoated portion 24 and the negative electrode uncoated portion 34, and the positive electrode foil tabs 24a and the negative electrode foil tabs 34a may not be omitted at the centrifugal side end portions of the positive electrode uncoated portion 24 and the negative electrode uncoated portion 34.

In the jelly-roll 11, the positive electrode foil tabs 24a and the negative electrode foil tabs 34a may be bent in a radial direction to be flattened. The positive electrode foil tabs 24a and the negative electrode foil tabs 34a may be bent radially inward or radially outward. In the drawings, a structure in which the positive electrode foil tabs 24a and the negative electrode foil tabs 34a are bent radially inward is illustrated, but the present invention is not limited thereto.

The positive electrode foil tabs 24a and the negative electrode foil tabs 34a may be bent and processed one by one during a process of forming the jelly-roll 11 by winding before winding. Alternatively, the positive electrode foil tabs 24a and the negative electrode foil tabs 34a may be bent and processed all at once after forming the jelly-roll 11 by winding before winding.

The positive electrode foil tabs 24a and the negative electrode foil tabs 34a, which are bent in the radial direction and overlapped, may respectively provide a plane substantially perpendicular to the axial direction at both axial ends of the jelly-roll 11.

A current collector plate 50 may be joined to a flat surface provided by bending the positive electrode foil tabs 24a and the negative electrode foil tabs 34a exposed at both axial ends of the jelly-roll 11.

The current collector plate 50 may include a positive electrode current collector plate 51 disposed to be joined to the positive electrode foil tabs 24a, and a negative electrode current collector plate 52 disposed to face the positive electrode current collector plate 51 so as to be joined to the negative electrode foil tabs 34a.

The positive electrode current collector plate 51 may include an aluminum material, and the negative electrode current collector plate 52 may include a copper material. The positive electrode current collector plate 51 and the negative electrode current collector plate 52 may be manufactured by punching, trimming, piercing, and bending a metal sheet. However, it is not limited thereto.

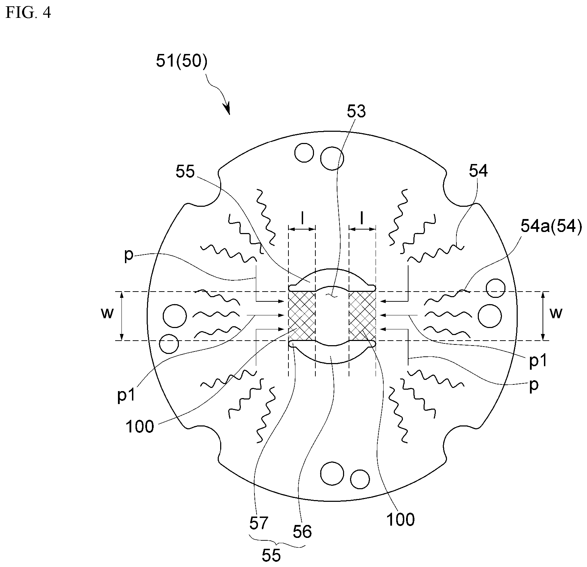

The positive electrode current collector plate 51 may be joined to the positive electrode foil tabs 24a of the positive electrode 20 through a method such as laser welding before the jelly-roll 11 is placed in the can 12. That is, the positive electrode current collector plate 51 may include a tab coupling portion 54 (see FIG. 4) provided to be coupled with the positive electrode foil tabs 24a through a method such as laser welding.

The jelly-roll 11 may be accommodated in the can 12 in a state in which the positive electrode current collector plate 51 is aligned toward the upper can 12a of the can 12. At this time, the positive electrode current collector plate 51 and the upper can 12a may be electrically insulated by interposing an insulator 15 between the positive electrode current collector plate 51 and the upper can 12a of the can 12.

The positive electrode current collector plate 51 may be joined to a rivet 13 fixed to the can 12 through a method such as resistance welding, ultrasonic welding, or laser welding. A welding device (not shown) for welding the positive electrode current collector plate 51 and the rivet 13 may approach a rear surface of a center of the positive electrode current collector plate 51 through a hollow of the jelly-roll 11 from a bottom open end of the can 12 to perform welding.

That is, the positive electrode current collector plate 51 may include a rivet coupling portion 53 (see FIG. 4) provided to be coupled with the rivet 13 through a method such as laser welding.

Of course, besides these, it goes without saying that the positive electrode current collector plate 51 and the rivet 13 may be joined by a method such as brazing or soldering. That is, various coupling methods may be applicable as long as a coupling between the positive electrode current collector plate 51 and the rivet 13 is a coupling method that electrically connects them and can mutually fix them.

The negative electrode current collector plate 52 may be connected to the negative electrode foil tabs 34a of the negative electrode 30. The negative electrode current collector plate 52 may be electrically connected by being welded with the negative electrode foil tabs 34a of the negative electrode 30 by an irradiated laser. A welding line of the laser may extend radially.

The negative electrode current collector plate 52 may be provided with a current collector plate hole (not shown) corresponding to a hollow configured to allow the center pin 14 for a winding core of the jelly-roll 11 to be inserted therethrough.

In a state in which the jelly-roll 11 is accommodated inside the can 12, the negative electrode foil tabs 34a and the negative electrode current collector plate 52 of the negative electrode 30 may be disposed to face an open end of the side wall can 12b. Further, an outer circumferential surface of the negative electrode current collector plate 52 may be in a state of being press-fitted while being in contact with an inner circumferential surface of the side wall can 12b.

The inner circumferential surface of the side wall can 12b and the outer circumferential surface of the negative electrode current collector plate 52 may be joined to each other through seam welding or the like. A bottom open end of the side wall can 12b may be covered by a lid 16, and the inner circumferential surface of the side wall can 12b and the lid 16 may be joined and finished through seam welding or the like. However, it is not limited thereto.

An electrolyte may be injected into the inside of the can 12 through an injection hole 16a provided in a center portion of the lid 16. After injecting the electrolyte, the injection hole 16a may be finished by a plug 16b.

Of course, the welding structure of the present invention may also be applied to a lid 16 in which an injection hole 16a and a plug 16b are not provided. According to this, an electrolyte may be first injected before covering the open end of the side wall can 12b with the lid 16, and after the injection of the electrolyte is completed, the open end of the side wall can 12b may be covered and finished with the lid 16.

An edge of the lid 16 may be joined to an edge of the side wall can 12b by being seam-welded with a laser L, and accordingly, the can 12 may be sealed.

However, the present invention is not limited thereto, and the cylindrical battery cell 10 according to the present invention may not include a separate lid 16, and the negative electrode current collector plate 52 may also perform the function of the lid 16. In this case, the negative electrode current collector plate 52 may constitute an exterior of the cylindrical battery cell 10 together with the can 12, and the can 12 and the negative electrode current collector plate 52 may function as a second electrode terminal.

A material of the negative electrode current collector plate 52 may be softer than a material of the side wall can 12b. A thermal conductivity of the negative electrode current collector plate 52 may be higher than a thermal conductivity of the side wall can 12b. For example, the material of the negative electrode current collector plate 52 may include copper, and the material of the side wall can 12b may include iron. However, it is not limited thereto.

FIG. 4 is a view illustrating a positive electrode current collector plate in a battery according to a first embodiment of the present invention. Referring to FIGS. 1 to 4, a battery 1 according to a first embodiment of the present invention may include a jelly-roll 11 in which a positive electrode 20, a negative electrode 30, and a separator 40 are wound in one direction, and a can 12 configured to accommodate the jelly-roll 11.

The battery 1 according to the first embodiment of the present invention may include a rivet 13 configured to be electrically connected to the jelly-roll 11 and pass through one side of the can 12, and a positive electrode current collector plate 51 disposed between the jelly-roll 11 and the rivet 13.

The positive electrode current collector plate 51 may have a substantially disc shape and may include a metal material having excellent electrical conductivity such as aluminum (Al).

The positive electrode current collector plate 51 may include a rivet coupling portion 53 coupled with the rivet 13, and tab coupling portions 54 provided on a radially outer side of the rivet coupling portion 53 so as to be coupled with the jelly-roll 11. The rivet coupling portion 53 may be located in a center region of the positive electrode current collector plate 51, and may be coupled with the rivet 13 through laser welding or the like to be electrically connected.

The tab coupling portions 54 may include a plurality of tab coupling portions 54. The plurality of tab coupling portions 54 may be disposed to be spaced apart from each other on a radially outer side of the rivet coupling portion 53.

Current may flow from the jelly-roll 11 to the positive electrode current collector plate 51 through the plurality of tab coupling portions 54, and current may flow from the positive electrode current collector plate 51 to the rivet 13 through the rivet coupling portion 53.

The plurality of tab coupling portions 54 may be disposed radially along a circumferential direction on the disc-shaped positive electrode current collector plate 51. This may be a structure advantageous for uniformly collecting current from the positive electrode foil tabs 24a distributed along the circumferential direction of the jelly-roll 11 to the positive electrode current collector plate 51. However, it is not limited thereto.

The plurality of tab coupling portions 54 may be coupled with the positive electrode foil tabs 24a provided at the positive electrode 20 of the jelly-roll 11 by welding, and welding between the plurality of tab coupling portions 54 and the positive electrode foil tabs 24a may be performed in a form of a plurality of welding beads. Current generated in the positive electrode active material layer 22 may be collected to the positive electrode current collector plate 51 by the plurality of tab coupling portions 54 including the plurality of welding beads.

A shape of the welding beads of the tab coupling portions 54 may include a straight line or a wavy form. The wavy weld bead shape may help stable coupling by widening a welding area and may alleviate stress due to thermal expansion. However, it is not limited thereto.

The positive electrode current collector plate 51 according to the first embodiment of the present invention may include a pair of slits 55 provided on an inner side of the plurality of tab coupling portions 54 and disposed to be spaced apart from each other so as to face each other, and a fusing bridge 100 provided between the pair of slits 55.

The fusing bridge 100 may constitute a path p of current flowing from the jelly-roll 11 to the rivet 13, and may be configured to be short-circuited by a current of a predetermined value or more flowing along the fusing bridge 100. That is, the fusing bridge 100 may correspond to a safety device that may melt and break when overcurrent flows through the positive electrode current collector plate 51.

The fusing bridge 100 may perform a function of a bridge located between the pair of slits 55.

The fusing bridge 100 may form a portion of the rivet coupling portion 53. However, the present invention is not limited thereto, and the rivet coupling portion 53 may overlap regions of the fusing bridge 100 and the pair of slits 55, and the rivet coupling portion 53 may be provided at a center of the positive electrode current collector plate 51 so as to be separated between the fusing bridge 100 and the pair of slits 55.

The pair of slits 55 according to the first embodiment of the present invention may be disposed parallel to each other. The pair of slits 55 may be disposed to be spaced apart from each other and to face each other substantially in parallel. However, it is not limited thereto.

Each of the pair of slits 55 may include a main slit 56 having an arc shape, and sub-slits 57 extending along a straight direction from both ends of the main slit 56.

The main slit 56 may constitute a portion of a tube shape or a donut shape. The sub-slits 57 extend from both ends of the main slit 56, thereby allowing a length l of the fusing bridge 100 to be formed long without increasing a size of the main slit 56.

The fusing bridge 100 may include a pair of fusing bridges 100 provided at one end and the other end of a pair of slits 55. The fusing bridge 100 according to the first embodiment of the present invention may be composed of two fusing bridges 100, including the pair of fusing bridges 100.

The pair of fusing bridges 100 may be provided to be spaced apart from each other so as to face each other based on a center of the positive electrode current collector plate 51. Each of the pair of fusing bridges 100 may form a quadrangular region. Each of the pair of fusing bridges 100 may form a rectangular region. However, it is not limited thereto.

Among the plurality of tab coupling portions 54, a first tab coupling portion 54a disposed adjacent to the rivet coupling portion 53 may be configured to be substantially parallel to the pair of slits 55. Accordingly, a first path p1 of current flowing from the first tab coupling portion 54a to the rivet coupling portion 53 may be configured to pass through the fusing bridge 100 along a substantially straight direction.

That is, the first path p1 may be a shortest distance path from the first tab coupling portion 54a toward a center of the rivet coupling portion 53.

The positive electrode current collector plate 51 according to the first embodiment of the present invention may allow the first path p1 of current, flowing from the first tab coupling portion 54a to the rivet coupling portion 53 through the fusing bridge 100, to constitute a shortest distance, and the first path p1 may form a straight line without bending or detouring. Accordingly, a decisive function of minimizing the DC internal resistance (DCIR) of the cylindrical battery cell 10 including the positive electrode current collector plate 51 may be performed according to a physical law (R∝1) that electrical resistance is proportional to a length of a path.

Briefly describing a method of measuring the DC internal resistance (DCIR) of the cylindrical battery cell 10, first, the cylindrical battery cell 10 may be discharged at a low speed through a relatively low current of 1C/3 to completely discharge a remaining charge of the cylindrical battery cell 10. By using a low current of 1C/3, the cylindrical battery cell 10 may be brought into a stable and uniform state.

1C may be a magnitude of current capable of completely charging or discharging a rated capacity of the cylindrical battery cell 10 for 1 hour, and 1C/3 may be a magnitude of current capable of completely charging or discharging the rated capacity of the cylindrical battery cell 10 for 3 hours.

Next, after fully charging the cylindrical battery cell 10 through a low current of 1C/3, an actual total capacity of the cylindrical battery cell 10 may be measured by measuring a total amount of charge discharged by the cylindrical battery cell 10 while completely discharging the cylindrical battery cell 10 through a low current of 1C/3.

Through such a pre-treatment process before measurement of the cylindrical battery cell 10, the cylindrical battery cell 10 may be made into a stable state before measurement, thereby minimizing an effect of a previous use history of the cylindrical battery cell 10 on measurement results and creating consistent measurement conditions.

Thereafter, after fully charging the cylindrical battery cell 10 through a low current of 1C/3, a state of charge (SOC) of the cylindrical battery cell 10 may be configured to an SOC 50 state by discharging only 50% of the measured actual total capacity of the cylindrical battery cell 10 through a low current of 1C/3.

The SOC 50 state may correspond to a state of charge (SOC) generally set for accurate measurement of the DC internal resistance (DCIR) of the cylindrical battery cell 10, since a value of the DC internal resistance (DCIR) of the cylindrical battery cell 10 may change depending on the state of charge (SOC) of the cylindrical battery cell 10. For example, when the SOC is 20% or less or 80% or more, the DC internal resistance (DCIR) may rapidly increase.

By applying a constant current (pulse) to the cylindrical battery cell 10 in the SOC 50 state for about 10 seconds, current and voltage before and after current application are measured, and the DC internal resistance (DCIR) of the cylindrical battery cell 10 may be measured according to Ohm's law that DC internal resistance (DCIR) is proportional to a voltage change and inversely proportional to a current change.

The measurement time of about 10 seconds may be an optimal time for capturing a point in time when voltage becomes relatively stabilized after complex resistance components are sufficiently expressed as current is applied to the cylindrical battery cell 10. Such a measurement method may be referred to as a pulse test method.

The positive electrode current collector plate 51 according to the first embodiment of the present invention may balance resistance R and fusing performance of the fusing bridge 100 by optimizing a physical shape (number N, width w, and length l) of the fusing bridge 100. The resistance R of the fusing bridge 100 may be proportional to resistivity ρ and length l, and may be inversely proportional to width w, thickness t, and number N.

Here, since the resistivity ρ and the thickness t of the fusing bridge 100 may not change as constant values, resistance R and fusing performance of the fusing bridge 100 may be optimized while modifying a physical shape including the number N, the width w, and the length l of the fusing bridge 100.

The fusing bridge 100 according to the first embodiment of the present invention may reduce the number N of fusing bridges 100 from typical four to two, widen the width w, and reduce the length l.

That is, the fusing bridge 100 according to the first embodiment of the present invention may have a small number and constitute a wide bridge region. When the number N of fusing bridges 100 decreases, resistance R of the fusing bridge 100 may increase, but when the width w increases, the resistance R of the fusing bridge 100 may decrease.

Accordingly, the fusing bridge 100 according to the first embodiment of the present invention may modify the physical shape including the number N, the width w, and the length l to minimize a change in a value of resistance R of the fusing bridge 100 required for fusing, and simplify a structure of the fusing bridge 100 to shorten a path p of current flowing from the tab coupling portion 54 to the rivet coupling portion 53, thereby reducing the DC internal resistance (DCIR) of the cylindrical battery cell 10 including the positive electrode current collector plate 51 to maximize performance of the cylindrical battery cell 10.

That is, the battery 1 according to the first embodiment of the present invention may maximize the performance of the cylindrical battery cell 10 by reducing the DC internal resistance (DCIR) of the cylindrical battery cell 10 while minimizing a change in a fusing time of the fusing bridge 100.

In the fusing bridge 100 according to the first embodiment of the present invention, a width w of the fusing bridge 100 may be greater than a length l of the fusing bridge 100. The width w of the fusing bridge 100 may be 3.0 mm to 6.0 mm. Preferably, the width w of the fusing bridge 100 may be 3.75 mm to 5.5 mm. More preferably, the width w of the fusing bridge 100 may be 3.75 mm or 5.5 mm. However, it is not limited thereto.

The length l of the fusing bridge 100 may be 2.0 mm to 5.0 mm. Preferably, the length l of the fusing bridge 100 may be 3 mm or more. More preferably, the length l of the fusing bridge 100 may be 3 mm. However, it is not limited thereto.

Accordingly, a DC internal resistance (DCIR) of the cylindrical battery cell 10 including the fusing bridge 100 according to the first embodiment of the present invention may be 2.3 mΩ or less. Preferably, the DC internal resistance (DCIR) of the cylindrical battery cell 10 may be approximately 2.2 mΩ or 1.5 mΩ. However, it is not limited thereto.

That is, when the length of the fusing bridge 100 is 3 mm and the width w of the fusing bridge 100 is 5.5 mm, the DC internal resistance (DCIR) of the cylindrical battery cell 10 may be 1.5 mΩ, and when the length of the fusing bridge 100 is 3 mm and the width w of the fusing bridge 100 is 3.75 mm, the DC internal resistance (DCIR) of the cylindrical battery cell 10 may be approximately 2.2 mΩ. However, it is not limited thereto.

That is, the width of the fusing bridge 100 according to the first embodiment of the present invention may be greater than or equal to a width of a first tab coupling portion 54a adjacent to the fusing bridge 100 among the plurality of tab coupling portions 54. Accordingly, an entire current flowing along the first tab coupling portion 54a may pass through the fusing bridge 100 along a shortest path following a straight path.

Therefore, in the cylindrical battery cell 10 including the fusing bridge 100 according to the first embodiment of the present invention, although the number N of the fusing bridges 100 is reduced, a resistance R applied to the fusing bridge 100 may be maintained, and by shortening a path p of current flowing from the tab coupling portion 54 to the rivet coupling portion 53, the DC internal resistance (DCIR) of the cylindrical battery cell 10 may be lowered while performing a fusing function of the fusing bridge 100, thereby maximizing performance.

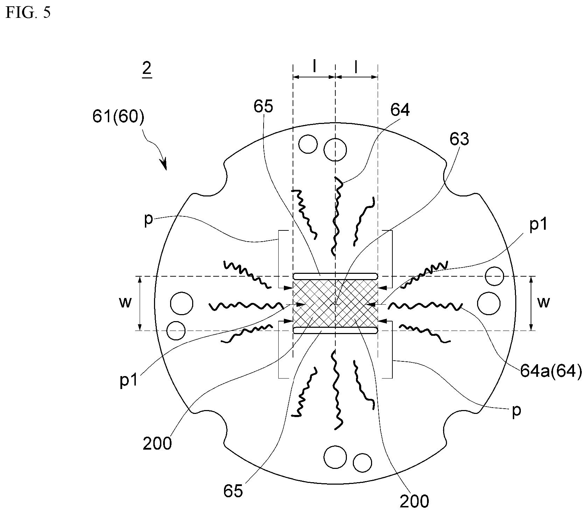

FIG. 5 is a view illustrating a positive electrode current collector plate in a battery according to a second embodiment of the present invention. Referring to FIGS. 1 to 3 and 5, a battery 2 including a current collector plate 60 according to a second embodiment of the present invention may include a jelly-roll 11 in which a positive electrode 20, a negative electrode 30, and a separator 40 are wound in one direction, and a can 12 configured to accommodate the jelly-roll 11. The current collector plate 60 according to the second embodiment of the present invention may include a positive electrode current collector plate 61.

The battery 2 including the positive electrode current collector plate 61 according to the second embodiment of the present invention may include a rivet 13 configured to be electrically connected to the jelly-roll 11 and pass through one side of the can 12, and the positive electrode current collector plate 61 disposed between the jelly-roll 11 and the rivet 13.

The positive electrode current collector plate 61 may have a substantially disc shape and may include a metal material having excellent electrical conductivity such as aluminum (Al).

The positive electrode current collector plate 61 may include a rivet coupling portion 63 coupled with the rivet 13, and tab coupling portions 64 provided on a radially outer side of the rivet coupling portion 63 so as to be coupled with the jelly-roll 11. The rivet coupling portion 63 may be located in a center region of the positive electrode current collector plate 61, and may be coupled with the rivet 13 through laser welding or the like to be electrically connected.

The tab coupling portions 64 may include a plurality of tab coupling portions 64. The plurality of tab coupling portions 64 may be disposed to be spaced apart from each other on a radially outer side of the rivet coupling portion 63.

Current may flow from the jelly-roll 11 to the positive electrode current collector plate 61 through the plurality of tab coupling portions 64, and current may flow from the positive electrode current collector plate 61 to the rivet 13 through the rivet coupling portion 63.

The plurality of tab coupling portions 64 may be disposed radially along a circumferential direction on the disc-shaped positive electrode current collector plate 61. This may be a structure advantageous for uniformly collecting current from the positive electrode foil tabs 24a distributed along the circumferential direction of the jelly-roll 11 to the positive electrode current collector plate 61. However, it is not limited thereto.

The plurality of tab coupling portions 64 may be coupled with the positive electrode foil tabs 24a provided at the positive electrode 20 of the jelly-roll 11 by welding, and welding between the plurality of tab coupling portions 64 and the positive electrode foil tabs 24a may be performed in a form of a plurality of welding beads. Current generated in the positive electrode active material layer 22 may be collected to the positive electrode current collector plate 61 by the plurality of tab coupling portions 64 including the plurality of welding beads.

A shape of the welding beads of the tab coupling portion 64 may include a straight line or a wavy form. The wavy weld bead shape may help stable coupling by widening a welding area and may alleviate stress due to thermal expansion. However, it is not limited thereto.

The positive electrode current collector plate 61 according to the second embodiment of the present invention may include a pair of slits 65 provided on an inner side of the plurality of tab coupling portions 64 and disposed to be spaced apart from each other so as to face each other, and a fusing bridge 200 provided between the pair of slits 65.

The fusing bridge 200 may constitute a path p of current flowing from the jelly-roll 11 to the rivet 13, and may be configured to be short-circuited by a current of a predetermined value or more flowing along the fusing bridge 200. That is, the fusing bridge 200 may correspond to a safety device that may melt and break when overcurrent flows through the positive electrode current collector plate 61. The fusing bridge 200 may perform a function of a bridge located between the pair of slits 65.

The fusing bridge 200 may form a portion of the rivet coupling portion 63. However, the present invention is not limited thereto, and the rivet coupling portion 63 may overlap regions of the fusing bridge 200 and the pair of slits 65, and the rivet coupling portion 63 may be provided at a center of the positive electrode current collector plate 61 so as to be separated between the fusing bridge 200 and the pair of slits 65.

The pair of slits 65 according to the second embodiment of the present invention may be disposed parallel to each other. The pair of slits 65 may be disposed to be spaced apart from each other and to face each other in parallel. However, it is not limited thereto.

Each of the pair of slits 65 may include a substantially straight bar shape. However, it is not limited thereto.

The fusing bridge 200 may include a pair of fusing bridges 200 respectively provided at one end and the other end of the pair of slits 65. The fusing bridge 200 according to the second embodiment of the present invention may be composed of two fusing bridges 200, including the pair of fusing bridges 200.

The pair of fusing bridges 200 may be provided to be spaced apart from each other so as to face each other based on a center of the positive electrode current collector plate 61. Each of the pair of fusing bridges 200 may form a quadrangular region. Each of the pair of fusing bridges 200 may form a rectangular region. However, it is not limited thereto.

Among the plurality of tab coupling portions 64, a first tab coupling portion 64a disposed adjacent to the rivet coupling portion 63 may be configured to be substantially parallel to the pair of slits 65. Accordingly, a first path p1 of current flowing from the first tab coupling portion 64a to the rivet coupling portion 63 may be configured to pass through the fusing bridge 200 along a substantially straight direction.

That is, the first path p1 may be a shortest distance path from the first tab coupling portion 64a toward a center of the rivet coupling portion 63.

The positive electrode current collector plate 61 according to the second embodiment of the present invention may allow the first path p1 of current, flowing from the first tab coupling portion 64a to the rivet coupling portion 63 through the fusing bridge 200, to constitute a shortest distance, and the first path p1 may form a straight line without bending or detouring. Accordingly, a decisive function of minimizing the DC internal resistance (DCIR) of the cylindrical battery cell 10 including the positive electrode current collector plate 61 may be performed according to a physical law (R∝1) that electrical resistance is proportional to a length of a path.

The positive electrode current collector plate 61 according to the second embodiment of the present invention may balance resistance R and fusing performance of the fusing bridge 200 by optimizing a physical shape (number N, width w, and length l) of the fusing bridge 200. The resistance R of the fusing bridge 200 may be proportional to resistivity ρ and length l, and may be inversely proportional to width w, thickness t, and number N.

Here, since the resistivity ρ and the thickness t of the fusing bridge 200 may not change as constant values, resistance R and fusing performance of the fusing bridge 200 may be optimized while modifying a physical shape including the number N, the width w, and the length l of the fusing bridge 200.

The fusing bridge 200 according to the second embodiment of the present invention may reduce the number N of fusing bridges 200 from general four to two, widen the width w, and reduce the length l.

That is, the fusing bridge 200 according to the second embodiment of the present invention may have a small number and constitute a wide bridge region. When the number N of fusing bridges 200 decreases, resistance R of the fusing bridge 200 may increase, but when the width w increases, the resistance R of the fusing bridge 200 may decrease.

Accordingly, the fusing bridge 200 according to the second embodiment of the present invention may modify the physical shape including the number N, the width w, and the length l to maintain a value of resistance R of the fusing bridge 200 required for fusing, and simplify a structure of the fusing bridge 200 to shorten a path p of current flowing from the tab coupling portion 64 to the rivet coupling portion 63, thereby reducing the DC internal resistance (DCIR) of the cylindrical battery cell 10 including the positive electrode current collector plate 61 to maximize performance of the cylindrical battery cell 10.

That is, the battery 2 according to the second embodiment of the present invention may maximize the performance of the cylindrical battery cell 10 by reducing the DC internal resistance (DCIR) of the cylindrical battery cell 10 while minimizing a change in a fusing time of the fusing bridge 200.

In the fusing bridge 200 according to the second embodiment of the present invention, a width w of the fusing bridge 200 may be greater than a length l of the fusing bridge 200. The width w of the fusing bridge 200 may be 3.0 mm to 6.0 mm. Preferably, the width w of the fusing bridge 200 may be 5.5 mm or more. More preferably, the width w of the fusing bridge 200 may be 5.5 mm. However, it is not limited thereto.

The length l of the fusing bridge 200 may be 2.0 mm to 5.0 mm. Preferably, the length l of the fusing bridge 200 may be 4.4 mm or more. More preferably, the length l of the fusing bridge 200 may be 4.4 mm. However, it is not limited thereto.

Accordingly, a DC internal resistance (DCIR) of the cylindrical battery cell 10 including the fusing bridge 200 according to the second embodiment of the present invention may be 2.3 mΩ or less. Preferably, the DC internal resistance (DCIR) of the cylindrical battery cell 10 may be approximately 2.2 mΩ. However, it is not limited thereto.

That is, when the length of the fusing bridge 200 is 4.4 mm and the width w of the fusing bridge 200 is 5.5 mm, the DC internal resistance (DCIR) of the cylindrical battery cell 10 may be 2.2 mΩ.

That is, the width of the fusing bridge 200 according to the second embodiment of the present invention may be greater than or equal to a width of a first tab coupling portion 64a adjacent to the fusing bridge 200 among the plurality of tab coupling portions 64. Accordingly, an entire current flowing along the first tab coupling portion 64a may pass through the fusing bridge 200 along a shortest path following a straight path.

Therefore, in the cylindrical battery cell 10 including the fusing bridge 200 according to the second embodiment of the present invention, although the number N of the fusing bridges 200 is reduced, a resistance R of the fusing bridge 200 may be maintained, and by shortening a path p of current flowing from the tab coupling portion 64 to the rivet coupling portion 63, the DC internal resistance (DCIR) of the cylindrical battery cell 10 may be lowered while performing a fusing function of the fusing bridge 200, thereby maximizing performance.

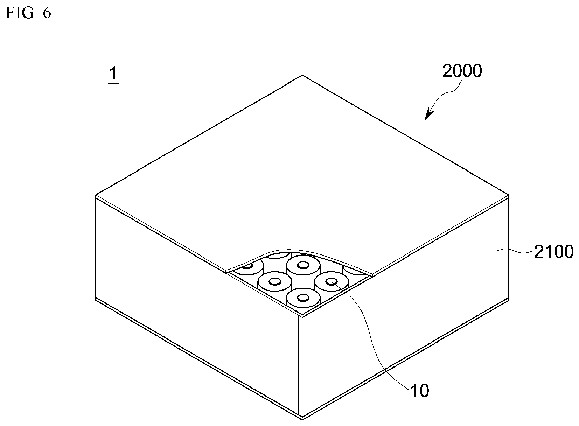

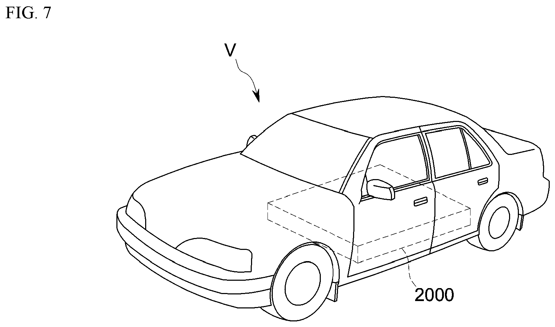

FIG. 6 is a view illustrating a battery pack in a battery according to a first embodiment of the present invention. FIG. 7 is a view illustrating a vehicle equipped with a battery according to a first embodiment of the present invention.

Referring to FIGS. 6 and 7, a battery 1 according to the present invention may include a plurality of cylindrical battery cells 10, and may include a battery pack 2000 formed by accommodating the plurality of cylindrical battery cells 10 in a pack case 2100. The battery pack 2000 may additionally include various control and protection systems such as a battery management system (BMS).

The battery pack 2000 may be applied to various devices. Specifically, the battery pack may be applied to transportation means such as electric bicycles, electric vehicles, and hybrid electric vehicles, or to an energy storage system (ESS), but is not limited thereto and may be applicable to various devices capable of using secondary batteries.

In an electric vehicle V, wheels are driven by a motor supplied with power from the battery pack 2000 constituted by the battery 1 according to the present invention, whereby the electric vehicle V may operate.

Although the technical spirit of the present invention as described above has been described by specific embodiments, the scope of rights of the present invention is not limited to these embodiments.

Various embodiments modified or changed by those skilled in the art within the scope not departing from the gist of the technical idea of the present invention specified in the claims will also fall within the scope of the present invention.

## Claims

1. A battery comprising a jelly-roll in which a positive electrode, a negative electrode, and a separator are wound in one direction, the battery comprising:
a can configured to accommodate the jelly-roll;
a rivet configured to be electrically connected to the jelly-roll and pass through one side of the can; and
a positive electrode current collector plate disposed between the jelly-roll and the rivet and including a rivet coupling portion coupled with the rivet and a plurality of tab coupling portions provided on a radially outer side of the rivet coupling portion so as to be coupled with the jelly-roll, wherein
the positive electrode current collector plate further includes:
a pair of slits provided on an inner side of the plurality of tab coupling portions and disposed to be spaced apart from each other so as to face each other; and
a fusing bridge forming a portion of the rivet coupling portion between the pair of slits and constituting a path of current flowing from the jelly-roll to the rivet.

2. The battery according to claim 1, wherein
the fusing bridge is configured to be short-circuited by a current of a predetermined value or more flowing along the fusing bridge, and
a width of the fusing bridge is greater than a length of the fusing bridge.

3. The battery according to claim 1, wherein
the pair of slits are disposed parallel to each other.

4. The battery according to claim 1, wherein
each of the pair of slits includes a main slit having an arc shape and sub-slits extending along a straight direction from both ends of the main slit.

5. The battery according to claim 1, wherein
the fusing bridge includes a pair of fusing bridges respectively provided at one end and the other end of the pair of slits.

6. The battery according to claim 1, wherein
a first tab coupling portion disposed adjacent to the rivet coupling portion among the plurality of tab coupling portions is configured to be substantially parallel to the pair of slits.

7. The battery according to claim 6, wherein
a first path of current flowing from the first tab coupling portion to the rivet coupling portion is configured to pass through the fusing bridge along a substantially straight direction.

8. The battery according to claim 7, wherein
the first path is a shortest distance path from the first tab coupling portion toward a center of the rivet coupling portion.

9. The battery according to claim 1, wherein
the width of the fusing bridge is 3.0 mm to 6.0 mm.

10. The battery according to claim 1, wherein
the width of the fusing bridge is 5.5 mm or less.

11. The battery according to claim 1, wherein
the length of the fusing bridge is 2.0 mm to 5.0 mm.

12. The battery according to claim 1, wherein
the length of the fusing bridge is 3 mm or more.

13. The battery according to claim 1, wherein
the battery includes a cylindrical battery cell, and
a DC internal resistance of the cylindrical battery cell is 2.3 mΩ or less.

14. A vehicle comprising the battery according to claim 1.

15. A positive electrode current collector plate disposed between a rivet electrically connected to a jelly-roll and a jelly-roll in which a positive electrode, a negative electrode, and a separator are wound in one direction, comprising:
a rivet coupling portion coupled with the rivet;
a plurality of tab coupling portions provided on a radially outer side of the rivet coupling portion so as to be coupled with the jelly-roll;
a pair of slits provided on an inner side of the plurality of tab coupling portions and disposed to be spaced apart from each other so as to face each other; and
a fusing bridge forming a portion of the rivet coupling portion between the pair of slits and constituting a path of current flowing from the jelly-roll to the rivet.
